# EUROPÄISCHE PATENTSCHRIFT

(11) **EP 1 185 843 B1**
(45) Veröffentlichungstag und Bekanntmachung des Hinweises auf die Patenterteilung: **06.10.2004**
(21) Anmeldenummer: 00949098.8
(22) Anmeldetag: 13.06.2000
(51) Int. Cl.: G01D 18/00, G01D 3/02

(54) **MESSUMFORMER**
MEASURING TRANSDUCER
CONVERTISSEUR DE MESURE

(30) Priorität: 15.06.1999 DE 19927282
(43) Veröffentlichungstag der Anmeldung: 13.03.2002
(73) Patentinhaber: SIEMENS AKTIENGESELLSCHAFT, 80333 München (DE)
(72) Erfinder: MUHR, Andreas, D-76351 Linkenheim-Hochstetten (DE); SCHMITH, Peter, D-76767 Hagenbach (DE)
(86) Internationale Anmeldenummer: PCT/DE2000/001942
(87) Internationale Veröffentlichungsnummer: WO 2000/077476

(56) Entgegenhaltungen:
- DE-B- 2 437 438
- US-A- 4 218 746
- US-A- 4 328 494
- US-A- 5 574 211

## Beschreibung

Die Erfindung betrifft einen Meßumformer mit einem Sensor zur Umwandlung einer damit erfaßten Meßgröße in ein elektrisches Sensorsignal, einer Signalaufbereitungseinrichtung zur Aufbereitung des Sensorsignals zu einem Meßsignal und einer Datenschnittstelle zur Übertragung des Meßsignals und zur Parametrierung des Meßumformers.

Ein derartiger, aus der US 4 328 494 A bekannter Meßumformer enthält eine Einrichtung zur Erzeugung eines einzelnen Simulationsmeßwertes, der auf Anforderung über die Datenschnittstelle erzeugt und über diese übertragen wird.

Aus der US 5 574 211 A ist ein Meßumformer bekannt, bei dem der Sensor über die Datenschnittstelle zur Erzeugung eines Meßwertes stimulierbar ist.

Aus der DE 24 37 438 B ist es bekannt, in einem meßsignalverarbeitenden System zwei unterschiedliche Simulationsmeßwerte bereitzustellen und zunächst den einen und anschließend den anderen der beiden Simulationsmeßwerte auszuwählen.

Die bei dem Stand der Technik gemäß den oben genannten Dokumenten erzeugten Simulationsmeßwerte werden zu Kalibrationszwecken herangezogen.

Ein aus dem SIEMENS-Katalog MP 17, 1999 bekannter Meßumformer mit der Bezeichnung SITRANS P DS weist einen Drucksensor auf, dessen Sensorsignal verstärkt, digitalisiert und anschließend in einem Mikrocontroller ausgewertet und bezüglich Linearität und Temperaturverhalten korrigiert wird. Das so aufbereitete Meßsignal wird über eine Datenschnittstelle, z. B. PROFIBUS oder HART, dem Kommunikationssystem einer technischen Anlage aufgegeben, in der der Meßumformer installiert ist. Über die Datenschnittstelle kann der Meßumformer beispielsweise von einer Anlagenwarte aus parametriert werden.

In größeren technischen Anlagen können tausende Meßumformer installiert sein. Um eine solche Anlage in Betrieb zu nehmen oder zu warten, müssen alle Verbindungswege beispielsweise von der Anlagenwarte aus zu den vielen einzelnen Meßstellen überprüft werden. Weiterhin muß die Funktionalität aller Teilbereiche sowie der Gesamtanlage beim ersten Einschalten gewährleistet sein. Durch Entfernungen von teilweise mehreren hundert Metern zwischen Anlagenwarte und Meßstellen kommen dabei in Summe viele Kilometer Leitungslänge zusammen, die verlegt, geprüft und instandgehalten werden müssen. Da zu diesen Zeitpunkten aber in der Regel keine Meßgrößen zur Verfügung stehen, wurden diese bisher innerhalb der Leittechnik der Anlage digital simuliert, wozu in den einzelnen Komponenten der Leittechnik dazu viel Speicherplatz und Programmlaufzeit vorgehalten werden mußte. Die langen Strecken von den Meßstellen zu der Anlagenwarte waren dabei von der Simulation ausgeschlossen und mußten mit anderen Mitteln überprüft werden. Um einen Meßumformer ohne zur Verfügung stehender Meßgröße in Betrieb zu nehmen, gibt es die Möglichkeit, einen Dummy-Sensor beispielsweise in Form eines Widerstandsnetzwerks an die Elektronik des Meßumformers anzuschließen. Der Dummy-Sensor kann auf verschiedene Widerstandswerte eingestellt werden und liefert somit ein Simulationssignal, das zu Testzwecken verwendet werden kann. Dies ist jedoch mit großem mechanischen Aufwand verbunden und erfordert den Einsatz von qualifiziertem Personal an den vielen einzelnen Meßstellen.

Der Erfindung liegt daher die Aufgabe zugrunde, die Inbetriebnahme und Instandhaltung von Anlagen mit darin angeordneten Meßumformern zu vereinfachen.

Gemäß der Erfindung wird die Aufgabe dadurch gelöst, daß der Meßumformer der eingangs angegebenen Art eine Einrichtung zur Erzeugung eines simulierten Meßsignals in Form einer zeitabhängigen Funktion aufweist und daß das simulierte Meßsignal auf Anforderung über die Datenschnittstelle übertragbar ist.

Die Simulation des Meßsignals im Meßumformer bietet den Vorteil, daß die Leitungsführung von der Anlagenwarte bis zu dem einzelnen Meßumformer geprüft werden kann. Darüber hinaus können ohne Vorhandensein von Meßgrößen an den Meßstellen durch Aktivierung der Simulation von der Anlagenwarte aus in dieser ersatzweise Meßsignale empfangen und weiterverarbeitet werden, so daß einzelne Prozeßabläufe oder Prozeßzustände im "kalten" Zustand der Anlage durchfahren und simuliert werden können. Ferner können während des Betriebs der Anlage beim Ausfall von Teilbereichen der Anlage Meßsignale durch Einschalten der Simulation für kurze Zeit beispielsweise mit dem zuletzt gültigen Meßwert simuliert werden; der Ausfall der gesamten Anlage kann dadurch verhindert werden.

Um auch wesentliche Teile der Signalaufbereitung des Meßumformers überprüfen zu können, ist vorzugsweise vorgesehen, daß das simulierte Meßsignal auf dem Weg zur Datenschnittstelle zumindest einen Teil der Signalaufbereitungseinrichtung des Meßumformers durchläuft. Dies kann beispielsweise dadurch geschehen, daß das verstärkte und anschließend digitalisierte Sensorsignal simuliert wird und anschließend in der Signalaufbereitungseinrichtung und weiter bis zur Datenschnittstelle denselben Weg durchläuft wie das Sensorsignal selbst; damit kann beispielsweise die Korrektur des Sensorsignals in der Signalaufbereitungseinrichtung bezüglich Linearität und Temperaturverhalten geprüft werden.

Um das simulierte Meßsignal auf Anforderung über die Datenschnittstelle übertragen zu können, enthält der erfindungsgemäße Meßumformer vorzugsweise eine steuerbare Umschalteinrichtung, die über die Datenschnittstelle entweder in eine das Meßsignal oder eine das simulierte Meßsignal an die Datenschnittstelle durchschaltende Schaltstellung umschaltbar ist.

Die Einrichtung zur Erzeugung des simulierten Meßsignals kann im einfachsten Fall einen Simulationsmeßwert-Speicher mit einem darin enthaltenen Simulationsmeßwert aufweisen, wobei über die Datenschnittstelle zwischen diese und den Simulationsmeßwert-Speicher mindestens ein Funktionsgenerator schaltbar ist, der das simulierte Meßsignal als Funktion des jeweiligen Simulationsmeßwertes über die Zeit erzeugt.

Vorzugsweise ist außerdem noch mindestens ein weiterer Simulationsmeßwert-Speicher mit einem weiteren Simulationsmeßwert vorhanden, wobei einer der Simulationsmeßwert-Speicher über die Datenschnittstelle zur Übertragung des darin abgespeicherten Simulationsmeßwertes auswählbar ist.

Alternativ kann die Einrichtung zur Erzeugung eines simulierten Meßsignals einen Simulationsmeßsignal-Speicher mit einer darin enthaltenen und das simulierte Meßsignal bildenden Simulationsmeßwert-Folge aufweisen. Dabei kann mindestens ein weiterer Simulationsmeßsignal-Speicher mit einer weiteren Simulationsmeßwert-Folge vorhanden sein, wobei die Simulationsmeßsignal-Speicher über die Datenschnittstelle zur Übertragung der simulierten Meßsignale auswählbar sind.

Um die Meßsignalsimulation jederzeit den momentanen Anforderungen anpassen zu können, ist bevorzugt vorgesehen, daß die beispielsweise durch die Anlagenwarte vorgebbaren Simulationsmeßwerte bzw. die Simulationsmeßwert-Folgen zur Abspeicherung über die Datenschnittstelle zu den Speichern des Meßumformers übertragbar sind.

Zur weiteren Erläuterung der Erfindung wird im folgenden auf die Figuren der Zeichnung Bezug genommen; im einzelnen zeigen:
- Figur 1: ein erstes und
- Figur 2: ein weiteres Ausführungsbeispiel des erfindungs gemäßen Meßumformers jeweils in Form eines Block schaltbildes.

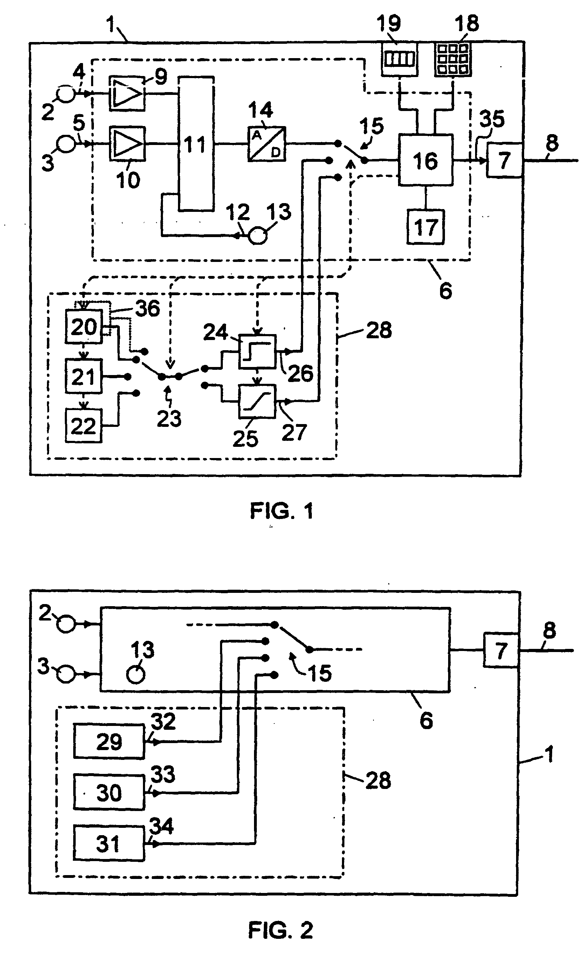

Der in Figur 1 gezeigte Meßumformer 1 weist zwei Sensoren 2 und 3 auf, mit denen Meßgrößen, hier z. B. Druck und Temperatur, an einer Meßstelle in einer technischen Anlage erfaßt und in elektrische Sensorsignale 4 und 5 umgewandelt werden. Die Sensorsignale 4 und 5 werden in einer Signalaufbereitungseinrichtung 6 zu einem oder mehreren Meßsignalen 35 aufbereitet und anschließend über eine Datenschnittstelle 7 an das Kommunikationssystem 8 der technischen Anlage übergeben.

In der Signalaufbereitungseinrichtung 6 werden die beiden Sensorsignale 4 und 5 über Signalverstärker 9 und 10 einem Multiplexer 11 zugeführt. Dieser erhält außerdem das Sensorsignal 12 eines Temperatursensors 13, der Bestandteil der Signalaufbereitungseinrichtung 6 ist und deren Temperatur erfaßt. Dem Multiplexer 11 ist ein Analog-/Digital-Umsetzer 14 zur Digitalisierung der Sensorsignale 4, 5 und 12 nachgeordnet. Die digitalisierten Sensorsignale 4, 5 und 12 gelangen über eine steuerbare Umschalteinrichtung 15 zu einem Mikrocontroller 16, in dem bei dem hier gezeigten Beispiel das Druck-Sensorsignal 4 ausgewertet und bezüglich Linearität und Temperaturverhalten korrigiert wird. Die Korrektur des Temperaturverhaltens erfolgt dabei in Abhängigkeit von der mit dem Sensor 3 an der Meßstelle in der technischen Anlage und der mit dem Sensor 13 in der Signalaufbereitungseinrichtung 6 jeweils erfaßten Temperatur. Außerdem werden für die Korrektur des Sensorsignals 4 Abgleichparameter herangezogen, die in einem EEPROM 17 hinterlegt sind. Die Parametrierung kann unmittelbar an dem Meßumformer 1 über eine Eingabeeinheit 18 mit zugehöriger Anzeigeeinheit 19 oder beispielsweise von einer Warte der technischen Anlage aus über das Kommunikationssystem 8 und die Datenschnittstelle 7 erfolgen.

Das in dem Mikrocontroller 16 zu dem Druck-Meßsignal 35 aufbereitete Druck-Sensorsignal 4 wird schließlich über die Datenschnittstelle 7 an das Kommunikationssystem 8 der Anlage übertragen. Bei der Datenschnittstelle 7 kann es sich beispielsweise um eine analoge 4- bis 20-mA-Schnittstelle mit gleichzeitiger digitaler Datenübertragung nach dem HART-Protokoll oder z. B. um eine digitale PROFIBUS-Schnittstelle handeln. Das Kommunikationssystem 8 ist dann entweder als Zweidrahtleitung oder als Bus ausgebildet.

Um während der Inbetriebnahme oder bei Wartungsarbeiten die dann in der Anlage nicht zur Verfügung stehenden Meßgrößen simulieren zu können, enthält der Meßumformer 1 eine Richtung 28 zur Vorgabe von simulierten Meßsignalen 26, 27. Dazu ist für jeden der Sensoren 2, 3 und 13 jeweils ein Simulationsmeßwert-Speicher 20, 21 und 22 vorgesehen, in dem jeweils ein simulierter digitaler Meßwert (Simulationsmeßwert) gespeichert ist. Jeder dieser Simulationsmeßwerte kann über eine steuerbare Verteilereinrichtung 23 jeweils einem von hier zwei Funktionsgeneratoren 24 und 25 zugeführt werden, die in Abhängigkeit von dem jeweiligen Simulationsmeßwert die simulierten Meßsignale 26, 27, hier in Form einer Sprungfunktion bzw. einer Rampenfunktion, erzeugen; darüber hinaus kommen beispielsweise auch sinusförmige oder asymptotisch verlaufende Funktionen in Frage. Je nach Schaltstellung der steuerbaren Umschalteinrichtung 15 werden entweder im Meßbetrieb des Meßumformers 1 die Sensorsignale 4, 5 oder 12 oder im Simulationsbetrieb eines der simulierten Meßsignale 26, 27 dem Mikrocontroller 16 zugeführt. Dort erfolgt die weitere Aufbereitung der simulierten Meßsignale 26, 27 in derselben Weise wie die der Sensorsignale 4, 5 und 12. Im Meßbetrieb wird das Meßsignal 35 und im Simulationsbetrieb werden die aufbereiteten simulierten Meßsignale 26, 27 über die Datenschnittstelle 7 an das Kommunikationssystem 8 der Anlage übertragen.

Die Steuerung der steuerbaren Umschalteinrichtung 15 und der Verteilereinrichtung 23 erfolgt aus der technischen Anlage heraus über die Datenschnittstelle 7 und den Mikrocontroller 16. Ferner sind die Simulationsmeßwerte in den Simulationsmeßwert-Speichern 20, 21 und 22 und Funktionsparameter in den Funktionsgeneratoren 24 und 25 über die Eingabeeinheit 18 oder die Datenschnittstelle 7 und den daran angeschlossenen Mikrocontroller 16 vorgebbar.

Wie beispielhaft für den Simulationsmeßwert-Speicher 20 mit dem darin enthaltenen Simulationsmeßwert für den Druck dargestellt ist, kann zusätzlich ein weiterer Simulationsmeßwert-Speicher 36 vorgesehen werden, der einen weiteren Simulationsmeßwert für den Druck enthält und der über die steuerbare Verteilereinrichtung 23 auswählbar ist.

Figur 2 zeigt in Form eines vereinfachten Blockschaltbildes ein alternatives Ausführungsbeispiel des in Figur 1 gezeigten Meßumformers 1. Dabei sind anstelle der Simulationsmeßwert-Speicher 20, 21 und 22 mit den nachgeordneten Funktionsgeneratoren 24 und 25 Simulationsmeßsignal-Speicher 29, 30, 31 vorgesehen, in denen simulierte Meßsignale 32, 33, 34 in Form von Simulationsmeßwert-Folgen gespeichert sind und die ausgangsseitig an der steuerbaren Umschalteinrichtung 15 angeschlossen sind.

## Patentansprüche

1. Meßumformer (1) mit einem Sensor (2, 3, 13) zur Umwandlung einer damit erfaßten Meßgröße in ein elektrisches Sensorsignal (4, 5, 12), einer Signalaufbereitungseinrichtung (6) zur Aufbereitung des Sensorsignals (4, 5, 12) zu einem Meßsignal (35) und einer Datenschnittstelle (7) zur Übertragung des Meßsignals (35) und zur Parametrierung des Meßumformers (1), **dadurch gekennzeichnet, daß** der Meßumformer (1) eine Einrichtung (28) zur Erzeugung eines simulierten Meßsignals (26, 27) in Form einer zeitabhängigen Funktion aufweist und daß das simulierte Meßsignal (26, 27) auf Anforderung über die Datenschnittstelle (7) übertragbar ist.

2. Meßumformer nach Anspruch 1, **dadurch gekennzeichnet, daß** das simulierte Meßsignal (26, 27) auf dem Weg zur Datenschnittstelle (7) zumindest einen Teil der Signalaufbereitungseinrichtung (6) durchläuft.

3. Meßumformer nach Anspruch 1 oder 2, **gekennzeichnet durch** eine steuerbare Umschalteinrichtung (15), die über die Datenschnittstelle (7) entweder in eine das Meßsignal (35) oder eine das simulierte Meßsignal (26, 27) an die Datenschnittstelle (7) durchschaltende Schaltstellung umschaltbar ist.

4. Meßumformer nach einem der vorangehenden Ansprüche, **dadurch gekennzeichnet, daß** die Einrichtung (28) zur Erzeugung des simulierten Meßsignals (26, 27) einen Simulationsmeßwert-Speicher (20, 21, 22) mit einem darin enthaltenen Simulationsmeßwert aufweist und daß über die Datenschnittstelle (7) zwischen diese und den Simulationsmeßwert-Speicher (20, 21, 22) mindestens ein Funktionsgenerator (24, 25) schaltbar ist, der das simulierte Meßsignal (26, 27) als Funktion des Simulationsmeßwertes über die Zeit erzeugt.

5. Meßumformer nach Anspruch 4, **dadurch gekennzeichnet, daß** mindestens ein weiterer Simulationsmeßwert-Speicher (36) mit einem weiteren Simulationsmeßwert vorhanden ist und daß einer der Simulationsmeßwert-Speicher (z.B. 20, 36) über die Datenschnittstelle (7) zur Anschaltung an den mindestens einen Funktionsgenerator (24, 25) auswählbar ist.

6. Meßumformer nach einem der Ansprüche 1 bis 3, **dadurch gekennzeichnet, daß** die Einrichtung (28) zur Erzeugung des simulierten Meßsignals (32, 33, 34) einen Simulationsmeßsignal-Speicher (z. B. 29) mit einer darin enthaltenen und das simulierte Meßsignal (32) bildenden Simulationsmeßwert-Folge aufweist.

7. Meßumformer nach Anspruch 6, **dadurch gekennzeichnet, daß** mindestens ein weiterer Simulationsmeßsignal-Speicher (30, 31) mit einer weiteren Simulationsmeßwert-Folge vorhanden ist und daß die Simulationsmeßsignal-Speicher (29, 30, 31) über die Datenschnittstelle (7) zur Übertragung der simulierten Meßsignale auswählbar sind.

8. Meßumformer nach einem der Ansprüche 4 bis 7, **dadurch gekennzeichnet, daß** die Simulationsmeßwerte bzw. Simulationsmeßwert-Folgen zur Abspeicherung über die Datenschnittstelle (7) zu den Speichern (20, 21, 22, 36; 29, 30, 31) übertragbar sind.

## Claims

1. A measuring transducer (1) having a sensor (2, 3, 13) for converting a measured variable which was captured by said sensor into an electrical sensor signal (4, 5, 12), a signal preparation device (6) for preparing the sensor signal (4, 5, 12) as a measurement signal (35), and a data interface (7) for transmitting the measurement signal (35) and for parameterising the measuring transducer (1), **characterized in that** the measuring transducer (1) has a device (28) for generating a simulated measurement signal (26, 27) in the form of a time-dependent function, and that the simulated measurement signal (26, 27) is transmissible upon request via the data interface (7).

2. The measuring transducer according to Claim 1, **characterised in that** the simulated measurement signal (26, 27) passes through at least a part of the signal preparation device (6) on the path to the data interface (7).

3. The measuring transducer according to Claim 1 or 2, **characterised by** a controllable switching device (15) which can be switched via the data interface (7) to a through-connecting switch position for either the measurement signal (35) or the simulated measurement signal (26, 27) to the data interface (7).

4. The measuring transducer according to one of the preceding claims, **characterised in that** the device (28) for generating the simulated measurement signal (26, 27) has a simulation measured value memory (20, 21, 22) containing a simulation measured value, and that at least one function generator (24, 25) between the data interface (7) and the simulation measured value memory (20, 21, 22) can be switched via said data interface (7) and generates the simulated measurement signal (26, 27) as a function of the simulation measured value over time.

5. The measuring transducer according to Claim 4, **characterised in that** at least one further simulation measured value memory (36) containing a further simulation measured value is provided, and that one of the simulation measured value memories (e.g. 20, 36) is selectable via the data interface (7) in order to connect to the function generator (24, 25), of which there is at least one.

6. The measuring transducer according to one of the Claims 1 to 3, **characterised in that** the device (28) for generating the simulated measurement signal (32, 33, 34) has a simulation measurement signal memory (e.g. 29) containing a simulation measured value string which forms the simulated measurement signal (32).

7. The measuring transducer according to Claim 6, **characterised in that** at least one further simulation measurement signal memory (30, 31) containing a further simulation measured value string is present, and that the simulation measurement signal memories (29, 30, 31) are selectable via the data interface (7) in order to transmit the simulated measurement signals.

8. The measuring transducer according to one of the Claims 4 to 7, **characterised in that** the simulation measured values or simulation measured value strings can be transmitted via the data interface (7) to the memories (20, 21, 22, 36; 29, 30, 31) for storage.

## Revendications

1. Convertisseur de mesure (1) comportant un capteur (2, 3, 13) pour la conversion d'une grandeur mesurée acquise avec ce capteur en un signal de capteur électrique (4, 5, 12), un dispositif de préparation de signal (6) pour la préparation du signal de capteur (4, 5, 12) pour donner un signal mesuré (35) et une interface de données (7) pour la transmission du signal mesuré (35) et pour le paramétrage du convertisseur de mesure (1), **caractérisé par le fait que** le convertisseur de mesure (1) comporte un dispositif (28) pour la production d'un signal mesuré simulé (26, 27) sous la forme d'une fonction dépendante du temps et que le signal mesuré simulé (26, 27) est transmissible sur demande par l'intermédiaire de l'interface de données (7).

2. Convertisseur de mesure selon la revendication 1, **caractérisé par le fait que** le signal mesuré simulé (26, 27) traverse, sur son trajet menant à l'interface de données (7), au moins une partie du dispositif de préparation de signal (6).

3. Convertisseur de mesure selon la revendication 1 ou 2, **caractérisé par** un dispositif de commutation commandable (15) qui peut être commuté par l'intermédiaire de l'interface de données (7) soit dans une position de commutation connectant le signal mesuré (35) sur l'interface de données (7) soit dans une position de commutation connectant le signal mesuré simulé (26, 27) sur l'interface de données (7).

4. Convertisseur de mesure selon l'une des revendications précédentes, **caractérisé par le fait que** le dispositif (28) pour la production du signal mesuré simulé (26, 27) comporte une mémoire de valeur mesurée simulée (20, 21, 22) avec une valeur mesurée simulée contenue à l'intérieur et que, par l'intermédiaire de l'interface de données (7), on peut brancher entre celle-ci et la mémoire de valeur mesurée simulée (20, 21, 22) au moins un générateur de fonction (24, 25) qui produit le signal mesuré simulé (26, 27) comme fonction de la valeur mesurée simulée en fonction du temps.

5. Convertisseur de mesure selon la revendication 4, **caractérisé par le fait qu'**il est prévu au moins une autre mémoire de valeur mesurée simulée (36) avec une autre valeur mesurée simulée et que l'une des mémoires de valeur mesurée simulée (par exemple 20, 36) est sélectionnable par l'intermédiaire de l'interface de données (7) pour la connexion à au moins un générateur de fonction (24, 25).

6. Convertisseur de mesure selon l'une des revendications 1 à 3, **caractérisé par le fait que** le dispositif (28) pour la production du signal mesuré simulé (32, 33, 34) comporte une mémoire de signal mesuré simulé (par exemple 29) avec une suite de valeurs mesurées simulées contenue à l'intérieur et formant le signal mesuré simulé (32).

7. Convertisseur de mesure selon la revendication 6, **caractérisé par le fait qu'**il est prévu au moins une autre mémoire de signal mesuré simulé (30, 31) avec une autre suite de valeurs mesurées simulées et que les mémoires de signal mesuré simulé (29, 30, 31) sont sélectionnables par l'intermédiaire de l'interface de données (7) pour la transmission des signaux mesurés simulés.

8. Convertisseur de mesure selon l'une des revendications 4 à 7,
**caractérisé par le fait que** les valeurs mesurées simulées ou les suites de valeurs mesurées simulées sont transmissibles pour mémorisation par l'intermédiaire de l'interface de données (7) aux mémoires (20, 21, 22, 36 ; 29,30,31).
